# EUROPEAN PATENT SPECIFICATION

(11) **EP 3 754 291 B1**
(45) Date of publication and mention of the grant of the patent: **07.01.2026**
(21) Application number: 19890323.9
(22) Date of filing: 30.05.2019
(51) Int. Cl.: F41J 2/02, F02K 1/82, B64D 27/16, B64D 33/04, B64U 50/12, B64U 101/19

(54) **INFRARED ENHANCER WITH CONTROLLABLE RADIATION POWER**
INFRAROTVERSTÄRKER MIT STEUERBARER STRAHLUNGSLEISTUNG
AMPLIFICATEUR D'INFRAROUGES À PUISSANCE DE RAYONNEMENT RÉGLABLE

(30) Priority: 26.11.2018 CN 201811421974; 26.11.2018 CN 201821958650 U
(43) Date of publication of application: 23.12.2020
(73) Proprietor: GFA Aviation Technology Beijing Co., Ltd., Beijing 102402 (CN)
(72) Inventor: WANG, Lei, Jiaozuo, Henan 454350 (CN); SUN, Lijun, Puyan, Henan 457001 (CN); CHEN, Tingfei, Putian, Fujian 351200 (CN)
(74) Representative: Vesterinen, Jussi Tapio
(86) International application number: PCT/CN2019/089285
(87) International publication number: WO 2020/107844

(56) References cited:
- CN-A- 103 470 376
- CN-A- 103 470 376
- CN-A- 104 266 552
- CN-A- 106 438 106
- CN-A- 109 372 652
- CN-U- 206 387 315
- CN-Y- 201 421 294
- US-A- 4 605 232
- US-A- 4 607 849
- US-A1- 2003 116 050
- US-A1- 2003 197 332
- US-A1- 2003 197 332

## Description

The present application claims the priority of the Chinese patent application submitted to the State Intellectual Property Office of China on November 26, 2018 and entitled "Infrared Enhancer With Controllable Radiant Power" with the application number 201811421974.1.

The present application claims the priority of the Chinese patent application submitted to the State Intellectual Property Office of China on November 26, 2018 and entitled "Infrared Enhancer With Controllable Radiant Power" with the application number 201821958650.7.

### TECHNICAL FIELD

The present invention relates to the technical field of unmanned aerial vehicles, in particular to an infrared enhancer with controllable radiant power.

### BACKGROUND

As a dynamic simulator that replaces a real aircraft, a target aircraft is mainly used to simulate real flying targets, and provides a realistic dynamic simulation target for evaluating the detection, tracking and guidance of various air defense weapons. However, except for a few large target aircrafts, most target aircrafts are generally smaller in size and quality than real flying targets, and their infrared characteristics are far from real targets. In order to effectively simulate the infrared radiation characteristics of real flying targets, it is necessary to carry enough infrared enhancement devices on the target aircraft.

Since the 1960s, various military powers in the world have begun to invest in infrared enhancement devices. At present, there are mainly two types of infrared enhancement devices widely used in target aircrafts, one type is an infrared mop and the other type is an infrared wing tip pod. The infrared enhancement device currently carried on the target aircraft in China generally adjusts its infrared radiation intensity by burning fuel to enhance the infrared characteristics of the target aircraft, which is close to the real simulated target characteristics to accurately identify the comprehensive performance of various weapon systems.

US2003197332 (A1) discloses a flying device for IR flying target representation with at least one infrared radiator. An infrared radiator is arranged inside the exhaust gas flow of a convected heat-generating unit, such as a gas turbine, so that the exhaust gas stream completely encloses the surface of the infrared radiator exposed to airflow.

US4605232 (A) discloses novel techniques for scattering infrared radiation employed to form a diffuse retro-reflector suitable as a target for night viewing by an infrared responsive detector.

US2003116050 (A1) provides an electrically powered augmenter device that has a silicon window. The silicon window emits the infrared radiation from the augmenter in a specific waveband, to attract heat seeking missles. Moreover, the augmenter may be mounted on the fuselage of an unpowered aerial towed target or other airborne vehicle.

US4607849 (A) discloses a jet exhaust simulator providing a multichamber jet fuel burner in which the fuel supplies to the chambers may be remotely and independently controlled, and in which a pilot flame chamber with squib igniter provides a reliable source of combustion. Primary, secondary, and tertiary fuel nozzles are provided, with the tertiary nozzles using straight venturis to inject large fuel drops into a burning fuel/air mixture in order to produce an exhaust plume closely simulating the length and infrared light emissions characteristics of a jet aircraft engine. The exhaust simulator is particularly adapted for use in a towable aerial target for the testing of infrared seeker guided shells or missles.

CN103470376 (A) discloses an infrared generator specially used for an infrared target and belongs to the field of aero-engines, and the infrared generator is used for solving the problems that the traditional infrared target adopts a method of explosive detonation to obtain infrared, thus the efficiency of target practice is low, and no high-level infrared target exists in China.

The applicant found that the prior art has at least the following technical problems: the currently commonly used infrared enhancer uses a high-temperature flame generated by internal gunpowder combustion and a metal shell heated by the flame as an infrared enhancement source. The gunpowder combustion is violent but has a short duration. Infrared enhancement is carried out in the way of burning fuel. The infrared enhancement effect is limited by the combustion radiation characteristics of the fuel, which is difficult to control and adjust.

### SUMMARY

The object of the present invention is to provide an infrared enhancer with controllable radiant power, to solve the technical problem in the prior art that it is difficult to control the radiant power of the infrared enhancer; many technical effects that can be produced by the preferred technical solutions among many technical solutions provided by the present invention are described in detail hereinafter.

To achieve the above object, the present invention provides an infrared enhancer as recited in claim 1.

Preferably, the heat insulation device comprises an asbestos layer, and the asbestos layer is attached to the inner side of the heating cone.

Preferably, the heat insulation cover is a cone, and the height of the cone is smaller than the cone height of the heating cone.

Preferably, the heating cone is a conical metal piece.

Preferably, a cylindrical current collecting hood is fixedly provided at the exhaust nozzle of the turbojet engine, and the conical end of the heating cone extends into the current collecting hood.

Preferably, the support component comprises a support cylinder, a support rod and a heat insulation tube, the support cylinder is provided at one end of the support rod and opposite to the installing adapter, the heat insulation tube is provided on the side of the support rod, and the pipeline and the cable of the turbojet engine are connected to the product to be installed through the heat insulation tube.

Preferably, the support cylinder, the turbojet engine and the heating cone are provided coaxially.

Preferably, there are three support rods, the support cylinder is a cylindrical straight cylinder, and the three support rods are connected to the side of the cylindrical straight cylinder.

Preferably, a rectifying cover is provided at an internal interface between the oil pipe and the cable of the turbojet engine and the product to be installed.

Compared with the prior art, the infrared enhancer with controllable radiant power provided by the present invention has the following beneficial effects.
1. The turbojet engine can be operated in different states such as in the idle, rated, and rotating state, and the engine speed and the flame temperature of the exhaust nozzle corresponding to each state are different; the heating cone is heated by the flame at the exhaust nozzle of the turbojet engine, the flame temperature at the exhaust nozzle can be controlled by controlling the size of the operating state of the engine, the flame at the exhaust nozzle of the turbojet engine heats the heating cone during operation, the heating cone is heated to form a stable infrared radiation source to achieve the purpose of enhancing the infrared characteristics of the target; the effect of controlling and adjusting the radiation power is achieved by controlling the operating state of the engine and adjusting the flame temperature at the exhaust nozzle.
2. The infrared enhancer with controllable radiant power provided by the present invention can simulate the infrared point source characteristics of an aviation jet engine, can be used head-on, can operate for a long time, can use aviation kerosene, and is suitable for a larger flight speed domain and an altitude domain.

### BRIEF DESCRIPTION OF THE DRAWINGS

In order to more clearly explain the embodiments of the present invention or the technical solutions in the prior art, the drawings required in the embodiments or the description of the prior art will be briefly introduced. Obviously, the drawings in the following description are only a part of the embodiments of the present invention. For those skilled in the art, other drawings can be obtained based on these drawings without paying any creative labor.

FIG. 1 is a front view of the overall structure of an infrared enhancer with controllable radiant power according to the present invention;

FIG. 2 is a side view of an infrared enhancer with controllable radiant power according to the present invention.

In the figures, 1. heating cone; 2. installing adapter; 3. cylindrical current collecting hood; 4. turbojet engine; 5. heat insulation cover; 61. support cylinder; 62. support rod; 63. heat insulation tube; 7. pipeline and cable of a turbojet engine.

### DESCRIPTION OF THE EMBODIMENTS

To make the objectives, technical solutions, and advantages of the present invention clearer, the technical solutions of the present invention will be described in detail hereinafter. Obviously, the described embodiments are only a part of the embodiments of the present invention, rather than all the embodiments.

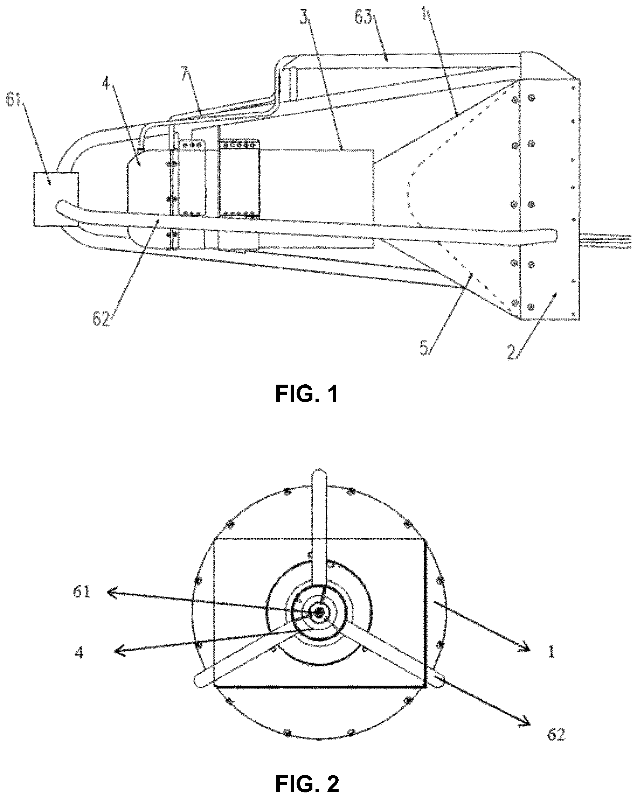

In the description of the present invention, it should be understood that the orientation or positional relationship indicated by the terms "center", "length", "width", "height", "upper", "lower", "front", "back", "left", "right", "vertical", "horizontal", "top", "bottom", "inner", "outer", "side", etc. is based on the orientation or positional relationship shown in FIG.1. It is only for the convenience of describing the present invention and simplifying the description, rather than indicating or implying that the indicated device or element must have a specific orientation or be constructed and operate in a specific orientation, and therefore cannot be construed as limiting the present invention. In the description of the present invention, unless otherwise stated, "a plurality of" means two or more.

The present invention provides an infrared enhancer with controllable radiant power, as shown in FIGS. 1 and 2. FIG. 1 is a front view of the overall structure of an infrared enhancer with controllable radiant power according to the present invention. FIG. 2 is a side view of an infrared enhancer with controllable radiant power according to the present invention. The infrared enhancer comprises a support component; a turbojet engine 4, which is fixed inside the support component; an installing adapter 2, which is used to connect the product to be installed, which is provided at one end of the support component, and is located on the side of the flame erupted from an exhaust nozzle of the turbojet engine 4; a heating cone 1, which is fixed to one end of the installing adapter 2 and toward the exhaust nozzle of the turbojet engine 4, wherein infrared enhanced coating is coated outside the heating cone 1, and a heat insulation device is provided inside the heating cone 1.

The above infrared enhancement mainly enhances the mid-infrared (3 ~ 5µm) and far infrared (8 ~ 14µm) bands. The selected infrared enhancement coating is selected according to this, rather than limited to a specific infrared enhancement coating. Those skilled in the art can make selection according to the radiant energy band of the infrared enhanced coating at high temperature, and make adjustment according to actual use requirements, which is not specifically limited here.

The above installing adapter 2 is a docking part of the entire device and the product. Since the infrared enhancer is generally used in conjunction with other products (such as a target aircraft, etc.), the adapter is a component that installs the infrared enhancer on other products, and can be adjusted according to the different products used without special structures and requirements. If the rear part of the installing adapter 2 is matched with the product structure, it can be connected and fixed on the product structure by means of screws or the like.

In order to reduce the dead weight of the above device and facilitate installation and fixation, it is preferable to select a micro-turbojet engine 4. The turbojet engine 4 can be clamped and fixed on the support component by an engine.

According to the infrared enhancer with controllable radiant power provided by the present invention, the turbojet engine 4 can be operated in different states such as in the idle, rated, and rotating state, and the engine speed and the flame temperature of the exhaust nozzle corresponding to each state are different; the heating cone 1 is heated by the flame at the exhaust nozzle of the turbojet engine 4, the flame temperature at the exhaust nozzle can be controlled by controlling the size of the operating state of the engine, the flame at the exhaust nozzle of the turbojet engine heats the heating cone 1 during operation, the infrared enhancement coating outside the heating cone 1 is heated to form a stable infrared radiation source to achieve the purpose of enhancing the infrared characteristics of the target; the effect of controlling and adjusting the radiation power is achieved by controlling the operating state of the engine and adjusting the flame temperature at the exhaust nozzle. The above infrared enhancer is carried on the target aircraft, which can effectively simulate the infrared radiation characteristics of real flying targets, so as to evaluate the detection, tracking and guidance of various air defense weapons.

It should be understood that the turbojet engine 4 commonly used in the art is provided with an ECU (engine control unit), which receives control commands and controls the engine to be operated in ditterent states such as in the idle, rated, and rotating state. The radiated power corresponding to different states is also different.

A heat insulation device is required in the heating cone 1 to prevent high temperature in the heating cone from damaging the components inside the product; in order to protect the components inside the product.

In order to enhance the heat insulation effect, the heat insulation device further comprises a heat insulation cover 5, as shown in FIG. 1. The heat insulation cover 5 is fixedly provided on the installing adapter 2 and extends to the inside of the heating cone 1, and the heat insulation cover 5 is provided coaxially with the heating cone 1 (the broken line indicates that it is provided inside the heating cone 1). The heat insulation cover 5 mainly plays a role of air flow concentration and heat insulation.

In a further embodiment, the heat insulation device also comprises an asbestos layer, and the asbestos layer is attached to the inner side of the heating cone 1.

The preferred solution is that the above heat insulation device is used in combination with the heat insulation cover 5 through the asbestos layer, the asbestos performs a primary heat insulation, and the heat insulation cover 5 in the heating cone 1 performs a secondary heat insulation, which can effectively prevent the high temperature inside the heating cone 1 from damaging components inside the product.

As an alternative embodiment, as shown in FIG. 1, the heat insulation cover 5 is a cone, and the height of the cone is smaller than the cone height of the heating cone 1. The heat insulation cover 5 and the heating cone 1 are provided on the same side of the installing adapter 2. The heat insulation cover 5 is placed inside the heating cone 1, and both of them have the same bottom, which can better isolate the heating cone 1 from generating high temperature on the installing adapter 2 and the target aircraft to prevent the internal structure from being damaged due to excessive temperature.

In order to make the heating cone 1 heat up rapidly and enhance its heat conduction to the infrared enhanced coating, as an alternative embodiment, the heating cone 1 is a conical metal piece.

The heating cone 1 is provided as a conical shape, which mainly has the following advantages: first, the conical shape is more suitable for and adapted to the shape of the head of the target aircraft and other products, and can be used head-on on the target aircraft; second, the flame at the exhaust nozzle of the turbojet engine 4 gradually diffuses to the conical tail through the conical end of the heating cone 1, which can make full use of the flame heat at the exhaust nozzle and can be heated more uniformly, preventing the difference between the temperature at the tail of the heating cone 1 and the temperature at the cone head from being too large.

As an alternative embodiment, referring to FIG. 1, a cylindrical current collecting hood 3 is fixedly provided at the exhaust nozzle of the turbojet engine 4, and the conical end of the heating cone 1 extends into the current collecting hood.

The above current collecting hood mainly plays the role of air flow concentration and heat insulation; the flame of the exhaust nozzle of the turbojet engine 4 is ejected through the inside of the current collecting hood to prevent the flame from spreading too much, so that the heat heats the heating cone 1 extending therein in a more concentrated manner.

As an alternative embodiment, referring to FIGS. 1 and 2, the support component comprises a support cylinder 61, a support rod 62 and a heat insulation tube 63, the support cylinder 61 is provided at one end of the support rod 62 and opposite to the installing adapter 2, the heat insulation tube 63 is provided on the side of the support rod 62, and the pipeline and the cable 7 of the turbojet engine are connected to the product to be installed through the heat insulation tube 63. The above heat insulation pipe 63 is used to fix and protect the pipeline and cable of the engine. Both ends of the support rod 62 are respectively fixed by the support cylinder 61 and the installing adapter 2 to facilitate the turbojet engine 4 to be clamped and fixed to the support rod 62 by the engine.

As an alternative embodiment, referring to FIG. 2, the support cylinder 61, the turbojet engine 4 and the heating cone 1 are provided coaxially.

To facilitate the coaxial arrangement of the above devices, as an alternative embodiment, referring to FIG. 1, there are three support rods 62, the support cylinder 61 is a cylindrical straight cylinder, and the three support rods 62 are connected to the side of the cylindrical straight cylinder. The three support rods 62 are connected to the cylindrical straight cylinder to determine the concentricity of the whole part.

As an alternative embodiment, a rectifying cover is provided at an internal interface between the oil pipe and the cable of the turbojet engine 4 and the product to be installed.

The rectifying cover is used to protect the oil pipe and the cable and to rectify the airflow of the fuselage on the product.

The present invention simulates the infrared point source characteristics of an aviation jet engine, uses the flame at the nozzle of the turbojet engine to heat the infrared enhanced coating outside the heating cone, the heating cone is heated to form a stable infrared radiator to achieve the purpose of enhancing the infrared characteristics of the target; the flame temperature at the exhaust nozzle is adjusted by controlling the operating state of the engine to achieve the effect of adjusting the radiant power. The above device can be used head-on, can operate for a long time, can use aviation kerosene, and is suitable for a larger flight speed domain and an altitude domain. **It** is a head-on universal infrared power enhancer with controllable radiant power.

In the description of this specification, specific features, structures, or characteristics may be combined in a suitable manner in any one or more embodiments or examples, to the extent that they fall within the scope of the claims.

The above are only specific embodiments of the present invention, but the protection scope of the present invention is not limited thereto. Any changes or replacements easily conceivable to those skilled in the art within the technical scope disclosed by the present invention should be covered by the protection scope of the present invention. Therefore, the protection scope of the present invention should be subject to the protection scope of the claims.

## Claims

1. An infrared enhancer with controllable radiant power, comprising a support component;
a turbojet engine (4), which can be operated in different states and is fixed inside the support component;
an installing adapter (2), which is used to connect the infrared enhancer to a target product on which it is to be installed, which is provided at one end of the support component, and is located on the side of the flame erupted from an exhaust nozzle of the turbojet engine (4);
a heating cone (1), which is heated by the flame and is fixed to one end of the installing adapter (2), and the heating cone (1) is pointing toward the exhaust nozzle of the turbojet engine (4), wherein infrared enhanced coating is coated outside on the heating cone (1), and a heat insulation device is provided inside the heating cone (1); and
wherein the heat insulation device comprises a heat insulation cover (5), the heat insulation cover (5) is fixedly provided on the installing adapter (2) and extends to the inside of the heating cone (1), and the heat insulation cover (5) is provided coaxially with the heating cone (1).

2. The infrared enhancer with controllable radiant power according to claim 1, wherein the heat insulation device comprises an asbestos layer, and the asbestos layer is attached to the inner side of the heating cone (1).

3. The infrared enhancer with controllable radiant power according to claim 1, wherein the heat insulation cover (5) is a cone, and the height of the cone is smaller than the cone height of the heating cone (1).

4. The infrared enhancer with controllable radiant power according to claim 1, wherein the heating cone (1) is a conical metal piece.

5. The infrared enhancer with controllable radiant power according to claim 1, wherein a cylindrical current collecting hood (3) is fixedly provided at the exhaust nozzle of the turbojet engine (4), and the conical end of the heating cone (1) extends into the current collecting hood (3).

6. The infrared enhancer with controllable radiant power according to claim 1, wherein the support component comprises a support cylinder (61), a support rod (62) and a heat insulation tube (63), the support cylinder (61) is provided at one end of the support rod (62) and opposite to the installing adapter (2), the heat insulation tube (63) is provided on the other end of the support rod (62), the turbojet engine (4) having a pipeline and cable (7), and the pipeline and the cable (7) of the turbojet engine (4) being connected to the target product to be installed through the heat insulation tube (63).

7. The infrared enhancer with controllable radiant power according to claim 6, wherein the support cylinder (61), the turbojet engine (4) and the heating cone (1) are provided coaxially.

8. The infrared enhancer with controllable radiant power according to claim 6 or 7, wherein there are three support rods (62), the support cylinder (61) is a cylindrical straight cylinder, and the three support rods (62) are connected to the side of the cylindrical straight cylinder.

9. The infrared enhancer with controllable radiant power according to claim 6, wherein a rectifying cover is provided at an internal interface between the pipeline and the cable (7) of the turbojet engine (4) and the target product to be installed, the rectifying cover protecting the pipeline and the cable, and rectifying the airflow of a fuselage of the target product.

## Patentansprüche

1. Infrarotverstärker mit einstellbarer Strahlungsleistung, umfassend:
ein Stützungselement;
ein Turbotriebwerk (4), das in verschiedenen Zuständen betrieben werden kann und im Inneren des Stützungselements befestigt ist;
einen Montageadapter (2), der verwendet wird, um den Infrarotverstärker mit einem Zielprodukt zu verbinden, auf dem er installiert werden soll, der an einem Ende des Stützungselements angebracht ist und sich auf der Seite der Flamme befindet, die aus einer Auslassdüse des Turbotriebwerks (4) austritt;
einen Heizkegel (1), der durch die Flamme beheizt wird und an einem Ende des Montageadapters (2) befestigt ist, wobei der Heizkegel (1) zur Auslassdüse des Turbotriebwerks (4) zeigt; wobei außen auf dem Heizkegel (1) eine infrarotverstärkende Beschichtung aufgebracht ist und im Inneren des Heizkegels (1) eine Wärmedämmeinrichtung vorgesehen ist; und
wobei die Wärmedämmeinrichtung eine Wärmeisolationsabdeckung (5) umfasst, die fest am Montageadapter (2) angebracht ist und sich in das Innere des Heizkegels (1) erstreckt, wobei die Wärmeisolationsabdeckung (5) koaxial zum Heizkegel (1) angeordnet ist.

2. Infrarotverstärker mit steuerbarer Strahlungsleistung nach Anspruch 1, wobei die Wärmedämmeinrichtung eine Asbestschicht umfasst und die Asbestschicht an der Innenseite des Heizkegels (1) angebracht ist.

3. Infrarotverstärker mit steuerbarer Strahlungsleistung nach Anspruch 1, wobei die Wärmeisolationsabdeckung (5) ein Kegel ist und die Höhe des Kegels kleiner ist als die Kegelhöhe des Heizkegels (1).

4. Infrarotverstärker mit einstellbarer Strahlungsleistung nach Anspruch 1, wobei der Heizkegel (1) ein kegelförmiges Metallstück ist.

5. Infrarotverstärker mit einstellbarer Strahlungsleistung nach Anspruch 1, **dadurch gekennzeichnet, dass** an der Auslassdüse der Turbotriebwerks (4) eine zylindrische Stromsammelhaube (3) fest angebracht ist und das kegelförmige Ende des Heizkegels (1) in die Stromsammelhaube (3) hineinragt.

6. Infrarotverstärker mit steuerbarer Strahlungsleistung nach Anspruch 1, wobei das Stützungselement einen Stützzylinder (61), eine Stützstange (62) und ein Wärmeisolationsrohr (63) umfasst, wobei der Stützzylinder (61) an einem Ende der Stützstange (62) und gegenüber dem Montageadapter (2) angeordnet ist, wobei das Wärmeisolationsrohr (63) am anderen Ende der Stützstange (62) angebracht ist, wobei das Turbotriebwerk (4) eine Rohrleitung und ein Kabel (7) aufweist und die Rohrleitung und das Kabel (7) des Turbotriebwerks (4) durch das Wärmeisolationsrohr (63) mit dem zu installierenden Zielprodukt verbunden sind.

7. Infrarotverstärker mit steuerbarer Strahlungsleistung nach Anspruch 6, wobei der Stützzylinder (61), das Turbotriebwerk (4) und der Heizkegel (1) koaxial angeordnet sind.

8. Infrarotverstärker mit steuerbarer Strahlungsleistung nach Anspruch 6 oder 7, **dadurch gekennzeichnet, dass** drei Stützstangen (62) vorgesehen sind, der Stützzylinder (61) ein zylindrischer Geradzylinder ist und die drei Stützstangen (62) an der Seite des zylindrischen Geradzylinders angebracht sind.

9. Infrarotverstärker mit steuerbarer Strahlungsleistung nach Anspruch 6, wobei an einer inneren Schnittstelle zwischen der Rohrleitung und dem Kabel (7) des Turbotriebwerk (4) und dem zu installierenden Zielprodukt eine Gleichrichterabdeckung vorgesehen ist, die die Rohrleitung und das Kabel schützt und den Luftstrom eines Rumpfes des Zielprodukt gleichrichtet.

## Revendications

1. Renforceur infrarouge à puissance rayonnante contrôlable, comprenant :
un composant de support ;
un moteur à turbine (4), qui est opérationnel dans différents états et est fixé à l'intérieur du composant de support ;
un adaptateur d'installation (2), qui est utilisé pour connecter l'amplificateur infrarouge à un produit cible à installer sur celui-ci, qui est disposé à une extrémité du composant de support, et est situé sur un côté de la flamme générée par une buse d'évacuation du moteur à turbine (4) ;
un cône chauffant (1), qui est chauffé par la flamme et est fixé à une extrémité de l'adaptateur d'installation (2), et le cône chauffant (1) étant orienté vers la buse d'évacuation du moteur à turbine (4), un revêtement renforcé infrarouge étant appliqué à l'extérieur du cône chauffant (1), et un dispositif d'isolation thermique étant prévu à l'intérieur du cône chauffant (1) ; et
dans lequel le dispositif d'isolation thermique comprend un couvercle d'isolation thermique (5), le couvercle d'isolation thermique (5) est disposé de manière fixe sur l'adaptateur d'installation (2) et s'étendant vers l'intérieur du cône chauffant (1), et le couvercle d'isolation thermique (5) est disposé coaxialement avec le cône chauffant (1).

2. Renforceur infrarouge à puissance rayonnante contrôlable selon la revendication 1, dans lequel le dispositif d'isolation thermique comprend une couche d'amiante, et la couche d'amiante est attachée à la paroi interne du cône chauffant (1).

3. Renforceur infrarouge à puissance rayonnante contrôlable selon la revendication 1, dans lequel le couvercle d'isolation thermique (5) est un cône, et une hauteur du cône est inférieure à une hauteur de cône du cône chauffant (1).

4. Renforceur infrarouge à puissance rayonnante contrôlable selon la revendication 1, dans lequel le cône chauffant (1) est une pièce métallique conique.

5. Renforceur infrarouge à puissance rayonnante contrôlable selon la revendication 1, dans lequel un capot collecteur de courant (3) cylindrique est disposé de manière fixe à la buse d'évacuation du moteur à turbine (4), et une extrémité conique du cône chauffant (1) s'étend jusqu'à l'intérieur du capot collecteur de courant (3).

6. Renforceur infrarouge à puissance rayonnante contrôlable selon la revendication 1, dans lequel le composant de support comprend un cylindre de support (61), une tige de support (62) et un tube d'isolation thermique (63), le cylindre de support (61) étant disposé à une extrémité de la tige de support (62) et à l'opposé de l'adaptateur d'installation (2), le tube d'isolation thermique (63) étant disposé à l'autre extrémité de la tige de support (62), le moteur à turbine (4) comportant un conduit et un câble (7), et le conduit et le câble (7) du moteur à turbine (4) étant relié au produit cible à installer par l'intermédiaire du tube d'isolation thermique (63).

7. Renforceur infrarouge à puissance rayonnante contrôlable selon la revendication 6, dans lequel le cylindre de support (61), le moteur à turbine (4) et le cône chauffant (1) sont disposés coaxialement.

8. Renforceur infrarouge à puissance rayonnante contrôlable selon la revendication 6 ou 7, dans lequel trois tiges de support (62) sont prévus, le cylindre de support (61) est un cylindre droit cylindrique, et les trois tiges de support (62) sont reliées au côté du cylindre droit cylindrique.

9. Renforceur infrarouge à puissance rayonnante contrôlable selon la revendication 6, dans lequel un couvercle de redressement est disposé à une interface interne entre le conduit et le câble (7) du moteur à turbine (4) et le produit cible à installer, le couvercle de redressement protégeant le conduit et le câble, et redressant le flux d'air d'une cellule du produit cible.
